# EUROPEAN PATENT SPECIFICATION

(11) **EP 3 227 777 B1**
(45) Date of publication and mention of the grant of the patent: **02.02.2022**
(21) Application number: 15865461.6
(22) Date of filing: 02.12.2015
(51) Int. Cl.: G06F 9/451, G06F 3/01, G06F 3/0488, G06F 9/445

(54) **APPLICATION LAUNCHING AND SWITCHING INTERFACE**
ANWENDUNGSSTART- UND SCHALTSCHNITTSTELLE
LANCEMENT D'APPLICATION ET INTERFACE DE COMMUTATION

(30) Priority: 04.12.2014 US 201414561163
(43) Date of publication of application: 11.10.2017
(73) Proprietor: Google LLC, Mountain View, CA 94043 (US)
(72) Inventor: MURPHY, Glen, Mountain View, CA 94043 (US); CHEN, Jennifer Shien-Ming, Mountain View, CA 94043 (US); KUSCHER, Alexander Friedrich, Mountain View, CA 94043 (US); GIRARD, Eugene Louis Charles, Kitchener Ontario N2G 1H6 (CA)
(74) Representative: Anderson, Oliver Ben
(86) International application number: PCT/US2015/063525
(87) International publication number: WO 2016/090042

(56) References cited:
- WO-A1-2014/123592
- US-A1- 2010 318 576
- US-A1- 2012 058 783
- US-A1- 2012 304 132
- US-A1- 2013 014 040
- US-A1- 2013 254 705
- US-A1- 2013 326 499

## Description

### BACKGROUND

The present disclosure relates generally to software applications and particularly to user interfaces for such applications.

Prior art document US 2013/254705 relates to a touch screen-enabled wearable computer with a multi-axis user interface and a method for providing the multi-axis user interface with at least two user interface regions that are displayed on the touch screen one at a time, each displaying a series of one or more application screens, and a combination of a vertical navigation axis and a horizontal navigation axis, wherein the vertical navigation axis enables a user to navigate between the multiple user interface regions in response to vertical swipe gestures made on the touch screen, and the horizontal navigation axis enables the user to navigate the application screens of a currently displayed user interface region in response to horizontal swipe gestures across the touch screen. A series of recently used applications screens may be displayed in response to detecting the user performing horizontal swipe gestures to move the currently displayed application screen to the left or to the right to reveal a previous or next application screen.

Furthermore, document US 2012/304132 discloses a method for switching back to a previously-interacted-with application, the selection of a user interface not currently exposed on a display is enabled through a simple (swipe) gesture that is both easy-to-use and remember.

### SUMMARY

The disclosed subject matter relates to an application launching and switching interface as defined in the appended claims 1-15.

In some innovative implementations, the disclosed subject matter can be embodied in a method. The method includes receiving an interactive gesture at a computing device, when the interactive gesture matches a predefined gesture, determining a current context of the computing device based at least on one or more tasks, the tasks including previously performed tasks at the computing device or predicted future tasks to be performed at the computing device, based on the determined context, identifying one or more software applications, the software applications including executing applications, terminated applications or uninstalled applications, to perform the one or more tasks, displaying one or more user interface elements representing the software applications, wherein the user interface elements are selectable to instantiate the identified software applications.

In some innovative implementations, the disclosed subject matter can be embodied in a machine readable medium. The machine readable medium includes instructions, which when executed by a processor, cause the processor to perform operations comprising determining a current context of a computing device based at least on one or more tasks, the tasks including previously performed tasks at the computing device or predicted future tasks to be performed at the computing device, receiving an interactive gesture at the computing device, determining whether the interactive gesture received at the computing device matches a predefined gesture; and when the received interactive gesture matches the predefined gesture, displaying, based on the determined context, one or more user interface elements selectable to instantiate respective software applications, where when the respective software applications are not installed at the computing device, the respective software applications are downloaded from a server and installed at the computing device for display upon selection of the one or more user interface elements.

In some innovative implementations, the disclosed subject matter can be embodied in a system. The system comprises a memory comprising instructions and a processor configured to execute the instructions to receive an interactive gesture at a computing device, when the interactive gesture matches a predefined gesture, determine a current context of the computing device based at least on one or more tasks, the tasks including previously performed tasks at the computing device or predicted future tasks to be performed at the computing device, based on the determined context, identify one or more software applications to perform the one or more tasks, the software applications including terminated applications or uninstalled applications to perform the one or more tasks and displaying one or more user interface elements selectable to instantiate the identified software applications.

It is understood that other configurations of the subject technology will become readily apparent to those skilled in the art from the following detailed description, where various configurations of the subject technology are shown and described by way of illustration. As will be realized, the subject technology is capable of other and different configurations and its several details are capable of modification in various other respects, all without departing from the scope of the subject technology. Accordingly, the drawings and detailed description are to be regarded as illustrative in nature and not as restrictive.

### BRIEF DESCRIPTION OF THE DRAWINGS

The novel features of the subject technology are set forth in the appended claims. However, for purpose of explanation, several configurations of the subject technology are set forth in the accompanying figures summarized below.
FIG. 1A is a diagram of an example device and network environment suitable for practicing some implementations of the subject technology.
FIG. 1B illustrates an example user interface including applications and user interface elements.
FIG. 2 illustrates an example process for practicing implementations of the subject technology using the example device of FIG. 1A.
FIG. 3 illustrates an example process for practicing implementations of the subject technology using the example device of FIG. 1A.
FIG. 4 illustrates yet another example process for practicing implementations of the subject technology using the example device of FIG. 1A

### DETAILED DESCRIPTION

The detailed description set forth below is intended as a description of various configurations of the subject technology and is not intended to represent the only configurations in which the subject technology may be practiced. The appended drawings are incorporated herein and constitute a part of the detailed description. The subject technology is not limited to the specific details set forth herein and may be practiced without these specific details.

A user may install several applications on a computing device (e.g., smartphone or tablet). To instantiate or open an application, a user may need to select an application icon from a menu. Over time, as the number of applications installed by the user increases, the user may need to sift through several application icons before locating an application the user intends to use. Furthermore, once an application is opened for use, the user may need to browse through several other opened applications before switching to another application. This consumes time and degrades user experience.

The disclosed aspects can allow a user to conveniently launch or switch applications using a unified interfacing method. For example, a user can provide a gesture to a touch screen to automatically display user interface elements (e.g., icons) to launch one or more applications that the user may need to use at a time the gesture is provided. The user may also provide gestures (e.g. swiping gesture) that allow the user to conveniently switch between one or more launched applications on displayed on the touch screen. Some implementations include receiving an interactive gesture at a computing device. When the interactive gesture matches a predefined gesture (e.g., a continued swipe gesture), a current context (e.g., current operational context) of the computing device can be determined based at least on one or more tasks previously performed at the computing device or predicted future tasks to be performed at the computing device. Based on the determined context, one or more software applications can be identified that include executing applications, terminated applications or uninstalled applications to perform the one or more tasks. One or more user interface elements can be displayed representing the software applications, where the user interface elements can be selected to instantiate respective software applications. When the one or more user interface elements are selected, the determined current context of the computing device can be automatically updated. The updated context can be used to identify other software applications when a next interactive gesture m ay be received. In some implementations, a user interface element over which the gesture (e.g., continued swiping gesture) is terminated can be identified and a software application associated with the user interface element can be displayed or switched to display. In this way, a user can conveniently launch or switch applications using a unified interfacing method. This improves user experience.

Some aspects of the subject technology include storing information regarding user accounts and software application usage activity. A user has the option of preventing storage of such information. The user may also be provided with an opportunity to control whether programs or features collect or share user information (e.g., information about the user's accounts, user's software application usage patterns, the user's preferences, etc.). Thus, the user may have control over how information is collected about the user and used by a computing device.

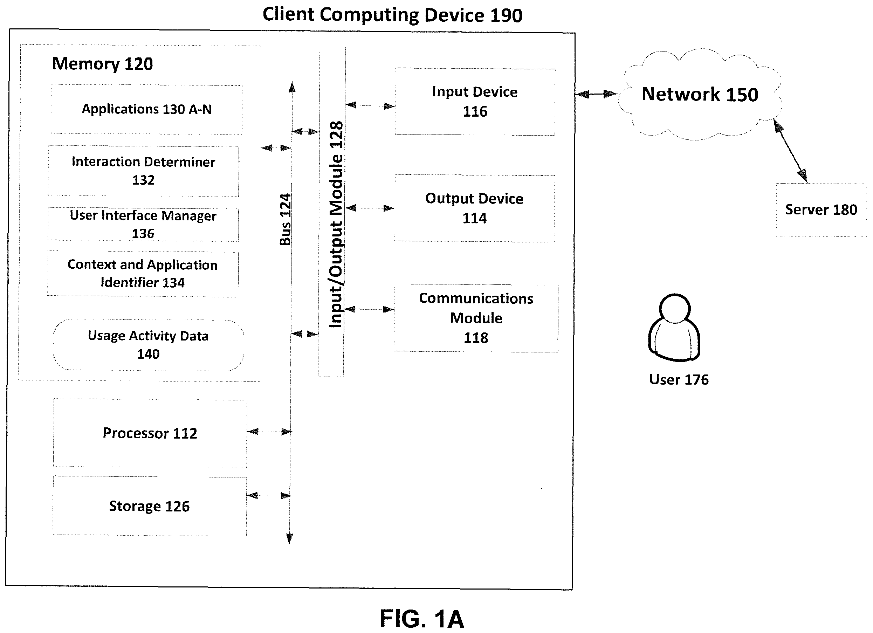

FIG. 1A is a diagram illustrating an example architecture for an application launching and switching interface according to some implementations of the subject technology. Client computing device 190 includes processor 112, memory 120, storage 126, bus 124, input/output module 128, input device 116, output device 114 and communications module 118. Memory 120 includes one or more software application(s) 130A-N, interaction determiner 132, context and application identifier 134, user interface manager 136 and usage activity data 140. In some implementations, client computing device 190 includes one or more modules for facilitating user interaction via a browser or web application. Client computing device 190 may include special purpose application that processes data stored at or retrieved from server 180 in connection with client computing device 190 over a network 150. Client computing device 190 may be implemented as a single machine with a single processor or a multi-processor machine. Communication module 118 can enable client computing device 190 to send and receive data over network 150 to server 180.

In some implementations, the server 180 may store usage data (or any other data) related to applications 130A-N that may be installed or operated at client computing device 190. The usage data may include times of use associated with each application 130A-N and duration of use of each of applications 130A-N. Server 180 may also store a database of applications that can be used to perform one or more tasks at client computing device 190. The applications need not be installed, previously accessed or executing at client computing device 190. For example, server 180 may store information in one or more database table rows indicating that "Application Voice" can be used for "Phone Calls." In some implementations, server 180 may store social content item(s) (e.g., posted content item(s)) associated with a social networking service. Server 180 may store data related to user accounts and content items that are associated with the user accounts. For example, server 180 can include data indicating content items that have been viewed, shared, commented on or endorsed (e.g., favored or disfavored) by a user account via applications 130A-N. Server 180 may also store authentication data (e.g., a username and password) associated with one or more social networking services or applications 130A-N.

In some implementations, client computing device 190 and server 180 can communicate with one another via network 150. Network 150 may include the Internet, an intranet, a local area network, a wide area network, a wired network, a wireless network, or a virtual private network (VPN). While only one client computing device 190 and server 180 are illustrated, the subject technology may be implemented in conjunction with any number of client computing devices 190 and servers 180. In some non-limiting implementations, a single computing device may implement the functions of client computing device 190, server 190 and other components illustrated in FIG. 1A.

Client computing device 190 can be a laptop computer, a desktop computer, a mobile phone, a personal digital assistant (PDA), a tablet computer, a netbook, a television with one or more processors embedded therein or coupled thereto, a physical machine, or a virtual machine. Client computing device 190 may include one or more of a keyboard, a mouse, a display, or a touch screen. Client computing device 190 can include a browser or any web application configured to display webpages or any web content. For example, the browser can display a webpage including content from server 180. Alternatively, client computing device 190 may include special-purpose applications (e.g., mobile phone or tablet computer applications) for accessing and displaying content.

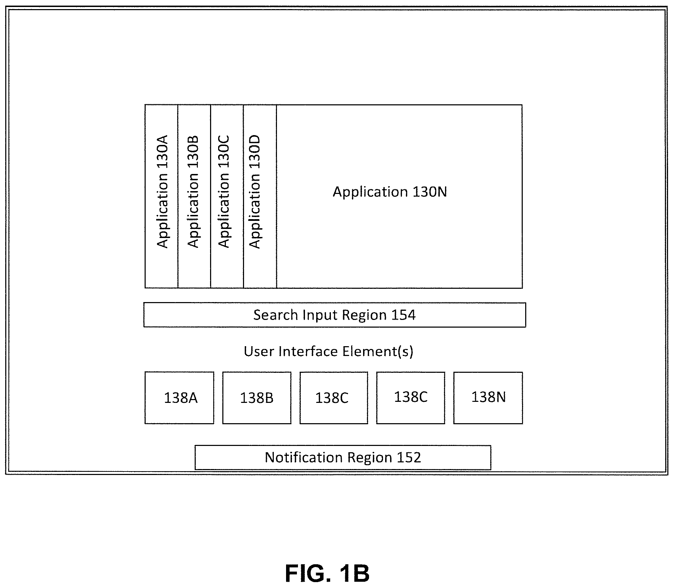

FIG. 1B illustrates an example user interface including applications 130A-N and user interface elements 138A-N representing respective applications 130A-N. For example, user interface element 138A may be selected to instantiate (or switch to display of) application 130A. User 176 may use touch gestures (e.g., swiping gestures) on a touch-sensitive display of computing device 190 to navigate through displayed applications 130A-N by touching a displayed representation of one or more applications 130A-N. User 176 may use search input region 154 to provide a search query that would allow user to search content and applications. Notification region 154 may display notifications or messages (e.g., emails, reminders, traffic updates, etc.) received at the client computing device 190. It is to be appreciated that the applications 130A-N and user interface elements 138A-N displayed in FIG. 1B are illustrative and are not intended to limit the disclosed implementations.

As discussed above, memory 120 of client computing device 190 can include one or more software application(s) 130A-N, interaction determiner 132, context and application identifier 134, user interface manager 136 and usage activity data 140. In some implementations, context and application identifier 134 determines one or more applications 130A-N executing on a client computing device 190, where one or more user interface element(s) 138A-N representing applications 130A-N allow switching between interactions with applications 130A-N. In some implementations, applications 130A-N need not be installed or previously accessed or interacted with via client computing device 190 and can be available for download from server 180. While FIG. 1A illustrates installed applications 130A_N, one or more of applications 130A-N may also be uninstalled or previously not installed at client computing device 190. In such scenarios, client computing device 190 may download and install one or more of applications 130A-N from server 180 or from an installation file associated with these applications 130A-N that may be resident on client computing device 190.

In some implementations, an interactive gesture may be received at client computing device 190. The gesture may be any type of interactive gesture (e.g., touch gesture). The interactive gesture may be of any shape or pattern (e.g., circular, swipe, sequential touch, etc.). The gesture may be received from user 176 when user 176 touches a finger on a touch-screen display of client computing device 190. Interaction determiner 132 may then check whether the gesture received from user 176 matches a predefined gesture. The predefined gesture may be stored in memory 120.

In some implementations, when the received interactive gesture matches the predefined gesture, context and application identifier 134 may determine a current context of client computing device 190 based at least on one or more tasks. The tasks can include previously performed tasks at client computing device 190 or predicted future tasks to be performed at the client computing device 190. The previously performed tasks may include, but are not limited to, application instantiations (or openings), actions performed within applications (e.g., records, audio plays, typing, mirroring application to another screen, etc.), application terminations (or closures). In some implementations, the predicted future task is based on whether states of the one or more applications, for example, 130B-N are similar to when the application 130A was previously executed or one or more recent tasks performed by user 130A with respect to a time of the prediction. When context and application identifier 134 determines that states of application 130B-N match a particular previous state of applications 130B-N when application 130A was launched, context and application identifier 134 determines that application 130A may be launched again in the future when states of application 130B-N again match the particular previous state. This example is purely illustrative and any other tasks may be predicted by context and application identifier 134.

In some implementations, a current context determined by context and application identifier 134 is associated with a particular time at which an interactive gesture is received and can indicate with respect to the particular time what tasks have previously been performed at client computing device 190 at the particular time and what future tasks are predicted to be performed after the particular time. Tasks that have been previously performed may be determined by context and application identifier 134 by reviewing usage activity 134. As discussed above, future tasks may be predicted based on whether states of the one or more applications, for example, 130B-N are similar to when the application 130A was previously executed or one or more recent tasks performed by user 130A with respect to a time of the prediction. The current context may also identify what resources (e.g., memory, hardware or software resources) are available at client computing device 190 at the particular time. The current context may include one or more values representing or identifying previous tasks, future tasks and resources associated with client computing device 190 and may be stored in a data structure (e.g., database table) stored in memory 120 that can be indexed by respective time values at which the current context (or updated context) is determined. The current context may also include (or be based on) usage activity data 140.

In some implementations, usage activity data 140 may include a frequency of use of one or more applications, time since an application was last used, time of day or day of week, geographical location of client computing device 190, content received/transmitted from client computing device 190, any other signals that may be external to client computing device 190. Usage activity data 140 may be a database table or any data structure that may store identifiers representing applications 130A-N installed on client computing device 190 with their respective usage parameters. An application identifier may be any numeric or alphanumeric value. For example an application identifier may be "Application 130A" and a usage parameter associated with it may be a date and time at which the application was most recently used by user 176 (e.g., January 2, 2014 12:05 AM). Other times at which the "Application 130A" may be interacted with by user 176 also be stored as historic data in usage activity data 140. Usage activity data 140 may also store operations performed within application 130A (e.g., records, audio plays, mirroring application to another screen, etc.).

Based on the context of client computing device 190 determined by context and application identifier 134 identifies one or more software applications. The software applications can include executing applications, terminated applications or uninstalled applications to perform the one or more tasks. In some implementations, context and application identifier identifies a software application or a software service that has previously not interacted with computing device 190 or accessed via the computing device. Context and application identifier 134 can identify one or more applications to perform the one or more tasks prior to the tasks being performed at client computing device 190. In other words, instructions from user 176 identifying a specific application to perform a task need not be received. Instead, the context and application identifier 134 may automatically identify one or more applications 130A-N that can be used by user 176 to perform the predicted tasks.

In some implementations, when the one or more applications 130A-N are identified by context and application identifier 134, user interface manager 136 displays one or more user interface elements 138A-N representing the applications 130A-N, where the user interface elements 138A-N can be selected to instantiate respective applications 130A-N. As noted above, the applications 130A-N can include un-installed applications, installed applications, terminated applications, executing applications, as well as software applications or a software services that have previously not interacted with computing device 190 or accessed via the computing device 190. As an example, user interface element 138A (e.g., voice application icon) may be displayed and can be selected to instantiate application 130A (e.g., voice call application). Application 130A need not be installed at client computing device 190 or previously accessed via client computing device 190. When application 130A is not installed at client computing device 190, context and application identifier 134 may automatically download (from server 180) and install the application for use by user 176 so that when the user 176 selects the user interface element 138A representing application 130A, application 130A is launched or instantiated for user by user 176. In this way, user interface elements 138A-N can be selected to instantiate respective software applications 130A-N regardless of whether the software applications are installed or terminated at the computing device. It is to be appreciated that applications 130A-N need not be "installed" at client computing device 190 prior to use and may be web applications or browser based applications that may not require installation.

In some implementations, when one or more user interface elements 138A-N are selected, context and application identifier 134 automatically determines an updated context of client computing device 190. Then, when a next interactive gesture is received at the client computing device 190, based on the updated context, context and application identifier 134 identifies other software applications (e.g., applications 130B-C) and displays other user interface elements representing the other software applications where the other user interface elements (e.g., 138B-C) can be selected to instantiate the respective other software applications.

In some implementations, the interactive gesture can be a continued swiping gesture where user 176 touches a finger and does not lift the finger off a touch-screen of client computing device until the finger reaches a user interface element that may be of interest to the user. In some implementations, user interface manager 136 initiates display of the user interface elements 138A-N when the continued swiping gesture is received from user 176. Context and application identifier 134 may identify a particular user interface element (e.g., 138C) over which the continued swiping gesture is terminated. Context and application identifier 134 then instantiates a software application (e.g., 130C) associated with the particular user interface element. In this way, a user can conveniently launch or switch applications using a unified interfacing method. This improves user experience.

In some implementations, interaction determiner 132 identifies a second interactive gesture received during receipt of a first interactive gesture. Interaction determiner 132 may determine, independently of the first interactive gesture, whether the second interactive gesture matches another predefined gesture. The first interactive gesture and the second interactive gesture may be both stored in memory 120 from where they are reviewed by interaction determiner 132. The first interactive gesture may be distinct from the second interactive gesture. As an illustrative example, the first interactive gesture may be a left swipe of a finger and the second interactive gesture may be a right swipe of another finger. As another illustrative example, the first interactive gesture may be a constant touch gesture with one finger and the second interactive gesture may be right, left or circular swipe with another finger. The first and second gestures may be received simultaneously or in succession. These examples are purely illustrative and non-limiting. In some implementations, when interaction determiner 132 determines that the second interactive gesture matches the other predefined gesture, context and application identifier 134 identifies one or more actions (e.g., launching of one or more applications or specific tasks within applications) that can be performed at client computing device 190 based on a determined context of client computing device 190 and performs the one or more actions based on the second interactive gesture or a combination of the first interactive gesture and the second interactive gesture.

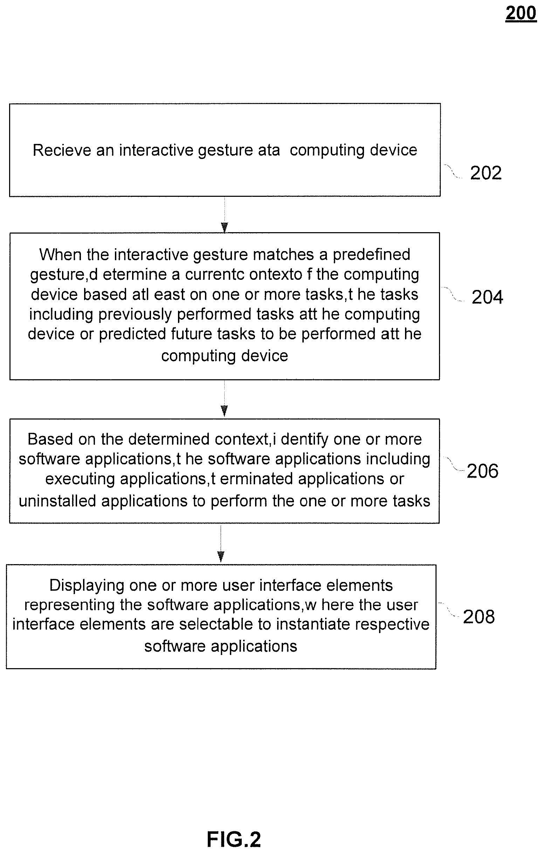

FIG. 2 is an example process 200 for practicing implementations of the subject technology using the example device of FIG. 1A. Although FIG. 2is described with reference to the elements of FIG. 1A, the process of FIG. 2 is not limited to such and can be applied within other systems.

Process 200 begins with receiving an interactive gesture at a computing device (stage 202). As an example, a touch-gesture may be received from user 176 at a touch screen display of client computing device 190.

When the interactive gesture matches a predefined gesture, a current context of the computing device can be determined based at least on one or more tasks, the tasks including previously performed tasks at the computing device or predicted future tasks to be performed at the computing device (stage 204). As an example, when interaction determiner 132 determines that an interactive gesture 132 received at client computing device 190 matches a predefined gesture stored in memory 120, context and application identifier 134 may determine a current context of client computing device 190. The current context of client computing device 190 may be determined based on the tasks including previously performed tasks at client computing device 190 or predicted future tasks to be performed at client computing device 190.

Based on the determined context, one or more software applications can be identified, where the software applications include executing applications, terminated applications or uninstalled applications to perform the one or more tasks (stage 206). As an example, application 130A (e.g., voice call app) may be identified to perform a particular task (e.g., voice call).

One or more user interface elements representing the software applications can be displayed where the user interface elements are selectable to instantiate the identified software applications (stage 208). As an example, user interface element 138A may be displayed and can be selected to instantiate application 130A.

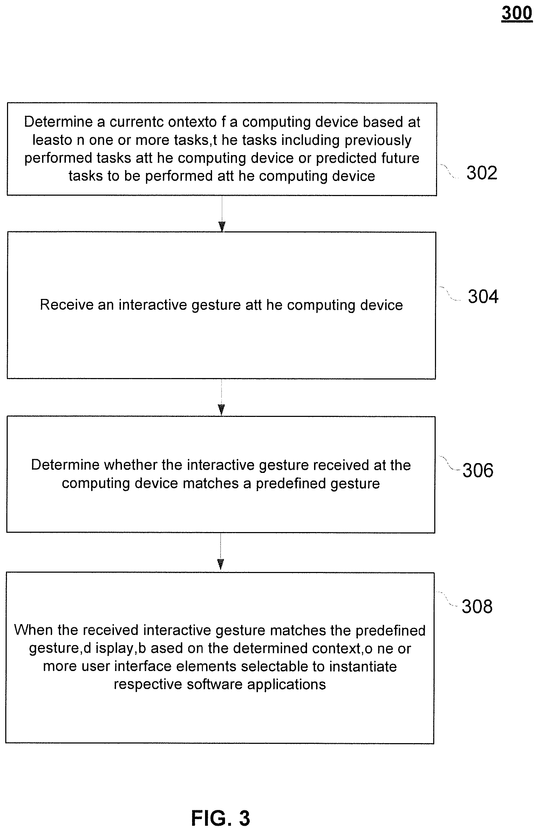

FIG. 3 is an example process 300 for practicing implementations of the subject technology using the example device of FIG. 1A. Although FIG. 3 is described with reference to the elements of FIG. 1A, the process of FIG. 3 is not limited to such and can be applied within other systems.

Process 300 begins with determining a current context of the computing device based at least on one or more tasks, the tasks including previously performed tasks at the computing device or predicted future tasks to be performed at the computing device (stage 302). As an example, the current context of client computing device 190 may be determined based on the tasks including previously performed tasks (e.g., video or audio plays, typing, opening and closing of an application, etc.) at client computing device 190 or predicted future tasks to be performed at client computing device 190.

An interactive gesture is received at the computing device (stage 304) and it is determined whethe r the interactive gesture received at the computing device matches a predefined gesture (stage 306). As an example, when interaction determiner 132 determines that an interactive gesture received at client computing device 190, interaction determiner 132 may check whether the received gesture matches a predefined gesture stored in memory 120.

When the received interactive gesture matches the predefined gesture, based on the determined context, one or more user interface elements selectable to instantiate respective software applications are displayed. When the respective software applications are not installed at the computing device, the respective software applications are downloaded from a server and installed at the computing device for display upon selection of the one or more user interface elements (stage 308).

As an example, user interface element 138A (e.g., voice application icon) may be displayed and can be selected to instantiate application 130A (e.g., voice call application). As an example, the application 130A need not be installed at client computing device 190 or previously accessed via client computing device 190. When application 130A is not installed at client computing device 190, context and application identifier 134 may automatically download and install the application for use by user 176 so that when the user 176 selects the user interface element 138A representing application 130A, application 130A is launched or instantiated for user by user 176. The automatic download and installation may occur when based on the determined context, one or more software applications (e.g., 130A) associated with the user interface elements (e.g., 138A) are identified. For example, when the application 130A is identified as an application to be opened by user 176 and application 176 is not installed or available at client computing device 190, then application and context identifier 134 may automatically install application 130A at client computing device 190 after download from server 180. The automatic download and installation may also occur when one or more user interface elements (e.g., 138A) are selected by a user.

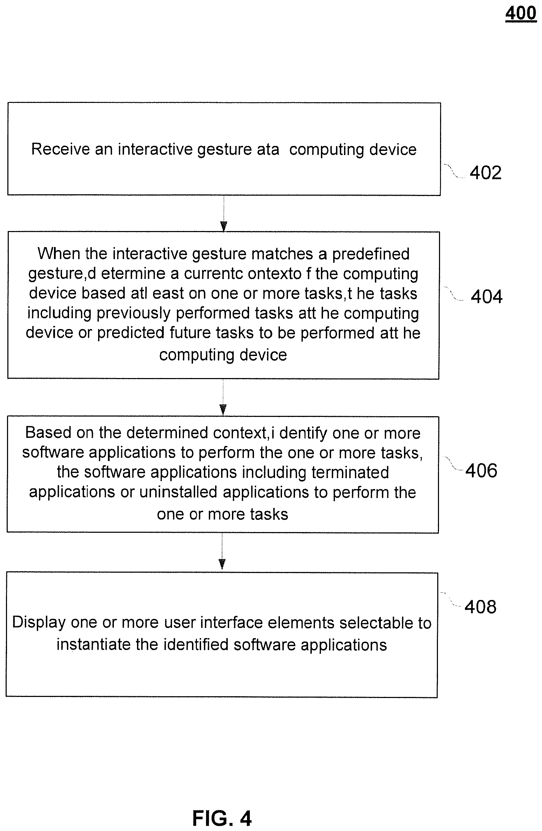

FIG. 4 is an example process 400 for practicing implementations of the subject technology using the example device of FIG. 1A. Although FIG. 4 is described with reference to the elements of FIG. 1A, the process of FIG. 4 is not limited to such and can be applied within other systems.

Process 400 begins with receiving an interactive gesture at a computing device (stage 402). As an example, a touch-gesture may be received from user 176 at a touch screen display of client computing device 190.

When the interactive gesture matches a predefined gesture, a current context of the computing device is determined based at least on one or more tasks, the tasks including previously performed tasks at the computing device or predicted future tasks to be performed at the computing device (stage 404). As an example, when interaction determiner 132 determines that an interactive gesture 132 received at client computing device 190 matches a predefined gesture stored in memory 120, context and application identifier 134 may determine a current context of client computing device 190. The current context of client computing device 190 may be determined based on the tasks including previously performed tasks at client computing device 190 or predicted future tasks to be performed at client computing device 190.

Based on the determined context, one or more software applications are identified to perform the one or more tasks, the software applications including terminated applications or uninstalled applications to perform the one or more tasks (stage 406). As an example, application 130A (e.g., voice call app) may be identified to perform a particular task (e.g., voice call). In some implementations, all applications that are available to perform a particular task may be identified. In other implementations, a subset of application to perform the particular task may be identified.

One or more user interface elements selectable to instantiate the identified software applications may be displayed (stage 408). As an example, user interface element 138A may be displayed and can be selected to instantiate application 130A.

Returning to FIG. 1A, in certain aspects, server 180 and client computing device 190 may be implemented using hardware or a combination of software and hardware, either in a dedicated server, or integrated into another entity, or distributed across multiple entities.

For example, client computing device 190 may includes a bus 124 or other communication mechanism for communicating information, and processor 112 coupled with bus 124 for processing information. Processor 112 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

Server 180 can include, in addition to hardware, code that creates an execution environment for the computer program in question, e.g., code that constitutes processor firmware, a protocol stack, a database management system, an operating system, or a combination of one or more of them stored in memory 120. Memory 120 may include Random Access Memory (RAM), a flash memory, a Read Only Memory (ROM), a Programmable Read-Only Memory (PROM), an Erasable PROM (EPROM), registers, a hard disk, a removable disk, a CD-ROM, a DVD, or any other suitable storage device, coupled to bus 124 for storing information and instructions to be executed by processor 112. The processor 112 and the memory 120 can be supplemented by, or incorporated in, special purpose logic circuitry.

The instructions may be stored in the memory 120 and implemented in one or more computer program products, i.e., one or more modules of computer program instructions encoded on a computer readable medium for execution by, or to control the operation of, the server 180, and according to any method well known to those of skill in the art, including, but not limited to, computer languages such as data-oriented languages (e.g., SQL, dBase), system languages (e.g., C, Objective-C, C++, Assembly), architectural languages (e.g., Java, .NET), and application languages (e.g., PHP, Ruby, Perl, Python). Instructions may also be implemented in computer languages such as array languages, aspect-oriented languages, assembly languages, authoring languages, command line interface languages, compiled languages, concurrent languages, curly-bracket languages, dataflow languages, data-structured languages, declarative languages, esoteric languages, extension languages, fourth-generation languages, functional languages, interactive mode languages, interpreted languages, iterative languages, list-based languages, little languages, logic-based languages, machine languages, macro languages, metaprogramming languages, multiparadigm languages, numerical analysis, non-English-based languages, object-oriented class-based languages, object-oriented prototype-based languages, off-side rule languages, procedural languages, reflective languages, rule-based languages, scripting languages, stack-based languages, synchronous languages, syntax handling languages, visual languages, wirth languages, embeddable languages, and xml-based languages. Memory 120 may also be used for storing temporary variable or other intermediate information during execution of instructions to be executed by processor 112.

A computer program as discussed herein does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

Server 180 further includes a data storage device 126 such as a magnetic disk or optical disk, coupled to bus 124 for storing information and instructions. Server 180 may be coupled via input/output module 128 to various devices. The input/output module 128 can be any input/output module. Example input/output modules 128 include data ports such as USB ports. The input/output module 128 is configured to connect to a communications module 118. Example communications modules 118 (e.g., communications module 118 and 238) include networking interface cards, such as Ethernet cards and modems. In certain aspects, the input/output module 128 is configured to connect to a plurality of devices, such as an input device 116 and/or an output device 114. Example input devices 114 include a keyboard and a pointing device, e.g., a mouse or a trackball, by which a user can provide input to the server 180. Other kinds of input devices 114 can be used to provide for interaction with a user as well, such as a tactile input device, visual input device, audio input device, or brain-computer interface device. For example, feedback provided to the user can be any form of sensory feedback, e.g., visual feedback, auditory feedback, or tactile feedback; and input from the user can be received in any form, including acoustic, speech, tactile, or brain wave input. Example output devices 116 include display devices, such as a LED (light emitting diode), CRT (cathode ray tube), or LCD (liquid crystal display) screen, for displaying information to the user.

According to one aspect of the present disclosure, server 180 can be implemented using a server 180 in response to processor 112 executing one or more sequences of one or more instructions contained in memory 120. Such instructions may be read into memory 120 from another machine-readable medium, such as data storage device 126. Execution of the sequences of instructions contained in main memory 120 causes processor 112 to perform the process blocks described herein. One or more processors in a multi-processing arrangement may also be employed to execute the sequences of instructions contained in memory 120. In alternative aspects, hard-wired circuitry may be used in place of or in combination with software instructions to implement various aspects of the present disclosure. Thus, aspects of the present disclosure are not limited to any specific combination of hardware circuitry and software.

Various aspects of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. The communication network (e.g., network 150) can include, for example, any one or more of a personal area network (PAN), a local area network (LAN), a campus area network (CAN), a metropolitan area network (MAN), a wide area network (WAN), a broadband network (BBN), the Internet, and the like. Further, the communication network can include, but is not limited to, for example, any one or more of the following network topologies, including a bus network, a star network, a ring network, a mesh network, a star-bus network, tree or hierarchical network, or the like. The communications modules can be, for example, modems or Ethernet cards.

Server 180 can be, for example, and without limitation, a desktop computer, laptop computer, or tablet computer. Server 180 can also be embedded in another device, for example, and without limitation, a mobile telephone, a personal digital assistant (PDA), a mobile audio player, a Global Positioning System (GPS) receiver, a video game console, and/or a television set top box.

The term "machine-readable storage medium" or "computer readable medium" as used herein refers to any medium or media that participates in providing instructions or data to processor 112 for execution. Such a medium may take many forms, including, but not limited to, non-volatile media and volatile media. Non-volatile media include, for example, optical disks, magnetic disks, or flash memory, such as data storage device 126. Volatile media include dynamic memory, such as memory 120. Transmission media include coaxial cables, copper wire, and fiber optics, including the wires that comprise bus 124. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter effecting a machine-readable propagated signal, or a combination of one or more of them.

As used herein, the phrase "at least one of' preceding a series of items, with the terms "and" or "or" to separate any of the items, modifies the list as a whole, rather than each member of the list (i.e., each item). The phrase "at least one of" does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

Furthermore, to the extent that the term "include," "have," or the like is used in the description or the claims, such term is intended to be inclusive in a manner similar to the term "comprise" as "comprise" is interpreted when employed as a transitional word in a claim.

A reference to an element in the singular is not intended to mean "one and only one" unless specifically stated, but rather "one or more." Moreover, nothing disclosed herein is intended to be dedicated to the public regardless of whether such disclosure is explicitly recited in the above description.

While this specification contains many specifics, these should not be construed as limitations on the scope of what may be claimed, but rather as descriptions of particular implementations of the subject matter. Certain features that are described in this specification in the context of separate aspects can also be implemented in combination in a single aspect. Conversely, various features that are described in the context of a single aspects can also be implemented in multiple aspects separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products.

The subject matter of this specification has been described in terms of particular aspects, but other aspects can be implemented and are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous. Other variations are within the scope of the following claims.

These and other implementations are within the scope of the following claims.

## Claims

1. A computer implemented method for application launching and/or switching in a computing device, the method comprising:
receiving an interactive gesture at the computing device;
when the interactive gesture matches a predefined gesture, determining a current context of the computing device based at least on one or more tasks, the tasks including previously performed tasks at the computing device and predicted future tasks to be performed at the computing device, the current context being associated with a time at which the interactive gesture is received and indicating with respect to said time what tasks have previously been performed and what future tasks are predicted to be performed after said time;
based on the determined context, identifying one or more software applications, the software applications including executing applications, terminated applications or uninstalled applications, to perform one or more of the predicted future tasks; and
displaying one or more user interface elements representing the one or more identified software applications, wherein the user interface elements are selectable to instantiate the identified software applications.

2. The method of claim 1, further comprising:
receiving a next interactive gesture;
when the next interactive gesture matches the predefined gesture, determining the current context of the computing device based at least on the one or more tasks, the tasks including the previously performed tasks at the computing device or the predicted future tasks to be performed at the computing device;
based on the determined context, identifying one or more other software applications; and
displaying other user interface elements representing the other software applications wherein the other user interface elements can be selected to instantiate the respective other software applications.

3. The method of claim 1, wherein the interactive gesture is a continuous swiping gesture comprising a touch beginning from a first point on a touch screen display of the computing device and ending at a second point on the touch screen display.

4. The method of claim 3, further comprising:
initiating display of the user interface elements when the continued swiping gesture is received;
identifying a particular user interface element displayed at the second point on the touch screen display; and
instantiating a software application associated with the particular user interface element.

5. The method of claim 1, further comprising:
identifying a second interactive gesture received during or following receipt of the first interactive gesture;
determining, independently of the first interactive gesture, whether the second interactive gesture matches another predefined gesture;
when the second interactive gesture matches the other predefined gesture,
identifying one or more actions that can be performed at the computing device based on the determined context; and
performing the one or more identified actions based on the second interactive gesture or a combination of the first interactive gesture and the second interactive gesture.

6. The method of claim 1, wherein the predicted future tasks are based on one or more recent tasks performed by the user with respect to a time of the prediction, the time of the prediction occurring when the current context of the computing device was determined.

7. The method of claim 1, further comprising:
identifying a software application or a software service that has previously not been interacted by a user via the computing device or accessed as a service via the computing device; and
displaying a user interface element representing the software application with the one or more user interface elements.

8. The method of claim 1, wherein when an identified software application is not installed at the computing device, the software application is downloaded from a server and installed at the computing device for display upon selection of the corresponding user interface element.

9. A machine readable medium comprising instructions stored therein, which when executed by a processor, causes the processor to perform a method according to any one of claim 1 to 8.

10. A system for application launching and/or switching in a computing device, the system comprising:
a memory comprising instructions; and
a processor configured to execute the instructions to:
receive an interactive gesture at the computing device;
when the interactive gesture matches a predefined gesture, determine a current context of the computing device based at least on one or more tasks, the tasks including previously performed tasks at the computing device and predicted future tasks to be performed at the computing device, the current context being associated with a time at which the interactive gesture is received and indicating with respect to said time what tasks have previously been performed and what future tasks are predicted to be performed after said time;
based on the determined context, identify one or more software applications to perform one or more of the predicted future tasks, the software applications including executing applications, terminated applications or uninstalled applications; and
display one or more user interface elements that represent the one or more identified software applications and are selectable to instantiate the identified software applications.

11. The system of claim 10, wherein the processor is further configured to execute the instructions to:
receive a next interactive gesture;
when the next interactive gesture matches the predefined gesture, determine the current context of the computing device based at least on the one or more tasks, the tasks including the previously performed tasks at the computing device or the predicted future tasks to be performed at the computing device;
based on the determined context, identify one or more other software applications; and
display other user interface elements representing the other software applications wherein the other user interface elements can be selected to instantiate the respective other software applications.

12. The system of claim 10, wherein the interactive gesture is a continuous swiping gesture comprising a touch beginning from a first point on a touch screen display of the computing device and ending at a second point on the touch screen display.

13. The system of claim 10, further comprising instructions stored therein, which when executed by the processor, causes the processor to perform operations comprising:
initiate display of the user interface elements when the continued swiping gesture is received;
identify a particular user interface element displayed at the second point on the touch screen display; and
instantiate a software application associated with the particular user interface element.

14. The system of claim 10, further comprising instructions stored therein, which when executed by the processor, causes the processor to perform operations comprising:
identify a second interactive gesture received during or following receipt of the first interactive gesture;
determine, independently of the first interactive gesture, whether the second interactive gesture matches another predefined gesture;
when the second interactive gesture matches the other predefined gesture,
identify one or more actions that can be performed at the computing device based on the determined context; and
perform the one or more identified actions based on the second interactive gesture or a combination of the first interactive gesture and the second interactive gesture.

15. The system of claim 10, wherein the predicted future tasks are based on one or more recent tasks performed by the user with respect to a time of the prediction, the time of the prediction occurring when the current context of the computing device was determined.

## Patentansprüche

1. Computerimplementiertes Verfahren zum Starten und/oder Umschalten von Anwendungen in einem Computergerät, das Verfahren umfassend:
Empfangen einer interaktiven Geste am Computergerät;
bei Übereinstimmung der interaktiven Geste mit einer vordefinierten Geste Bestimmen eines aktuellen Kontexts des Computergeräts basierend auf zumindest einer oder mehreren Aufgaben, die Aufgaben einschließlich zuvor ausgeführter Aufgaben am Computergerät und vorhergesagter zukünftiger Aufgaben, die am Computergerät ausgeführt werden sollen, wobei der aktuelle Kontext mit einer Zeit verknüpft ist, zu der die interaktive Geste empfangen wird, und in Bezug auf die Zeit angibt, welche Aufgaben zuvor ausgeführt wurden, und welche zukünftigen Aufgaben nach der besagten Zeit vorhergesagt werden;
basierend auf dem ermittelten Kontext, Identifizieren einer oder mehrerer Softwareanwendungen, wobei Softwareanwendungen das Ausführen von Anwendungen, abgeschlossene Anwendungen oder nicht installierte Anwendungen umfasst, um eine oder mehrere der vorhergesagten zukünftigen Aufgaben auszuführen; und
Anzeigen eines oder mehrerer Benutzeroberflächenelemente, die eine oder mehrere identifizierte Softwareanwendungen darstellen, wobei die Benutzeroberflächenelemente wählbar sind, um identifizierte Softwareanwendungen zu instanziieren.

2. Verfahren nach Anspruch 1, ferner umfassend:
Empfangen einer nächsten interaktiven Geste;
bei Übereinstimmung der nächsten interaktiven Geste mit der vordefinierten Geste Bestimmung des aktuellen Kontexts des Computergeräts basierend auf zumindest der einen oder den mehreren Aufgaben, wobei die Aufgaben die zuvor ausgeführten Aufgaben am Computergerät oder die vorhergesagten zukünftigen Aufgaben beinhalten, die am Computergerät ausgeführt werden sollen;
basierend auf dem ermittelten Kontext Identifizieren einer oder mehrerer anderer Softwareanwendungen; und
Anzeigen anderer Benutzeroberflächenelemente, die andere Softwareanwendungen darstellen, wobei die anderen Benutzeroberflächenelemente ausgewählt werden können, um entsprechende andere Softwareanwendungen zu instanziieren.

3. Verfahren nach Anspruch 1, wobei die interaktive Geste eine kontinuierliche Wischgeste ist, die eine Berührung umfasst, die von einem ersten Punkt auf einer Berührungsbildschirmanzeige des Computergeräts beginnt und an einem zweiten Punkt auf der Berührungsbildschirmanzeige endet.

4. Verfahren nach Anspruch 3, ferner umfassend:
Initiieren der Anzeige der Benutzeroberflächenelemente, wenn die fortgesetzte Wischgeste empfangen wird;
Identifizieren eines bestimmten Benutzeroberflächenelements, das am zweiten Punkt auf der Berührungsbildschirmanzeige angezeigt wird; und
Instanziierung einer Softwareanwendung, die mit dem bestimmten Benutzeroberflächenelement verknüpft ist.

5. Verfahren nach Anspruch 1, ferner umfassend:
Identifizierung einer zweiten interaktiven Geste, die während oder nach Empfangen der ersten interaktiven Geste empfangen wird;
Bestimmung, unabhängig von der ersten interaktiven Geste, ob die zweite interaktive Geste mit einer anderen vordefinierten Geste übereinstimmt;
bei Übereinstimmung der zweiten interaktiven Geste mit der anderen vordefinierten Geste,
Identifizierung einer oder mehrerer Aktionen, die auf dem Computergerät, basierend auf dem bestimmten Kontext, ausgeführt werden können; und
Durchführung der einen oder mehreren identifizierten Aktionen, basierend auf der zweiten interaktiven Geste oder einer Kombination von der ersten interaktiven Geste und der zweiten interaktiven Geste.

6. Verfahren nach Anspruch 1, wobei die vorhergesagten zukünftigen Aufgaben auf einer oder mehreren letzten Aufgaben basieren, die vom Benutzer in Bezug auf eine Zeit der Vorhersage durchgeführt werden, wobei die Zeit der Vorhersage auftritt, wenn der aktuelle Kontext des Computergeräts bestimmt wurde.

7. Verfahren nach Anspruch 1, ferner umfassend:
Identifizieren einer Softwareanwendung oder eines Softwaredienstes, auf welche(s) zuvor nicht durch einen Benutzer über das Computergerät interagiert wurde oder auf die nicht als Dienst über das Computergerät zugegriffen wurde; und
Anzeigen eines Benutzeroberflächenelements, das die Softwareanwendung mit dem einen oder den mehreren Benutzeroberflächenelementen darstellt.

8. Verfahren nach Anspruch 1, wobei, wenn eine identifizierte Softwareanwendung nicht auf dem Computergerät installiert ist, die Softwareanwendung von einem Server heruntergeladen und auf dem Computergerät zur Anzeige bei Auswahl des entsprechenden Benutzeroberflächenelements installiert wird.

9. Maschinenlesbares Medium, das darauf gespeicherte Anweisungen umfasst, die bei Ausführung durch einen Prozessor den Prozessor veranlassen, ein Verfahren nach einem der Ansprüche 1 bis 8 auszuführen.

10. System zum Aufrufen und/oder Umschalten von Anwendungen in einem Computergerät, das System umfassend:
einen Speicher, der Anweisungen umfasst; und
einen Prozessor, konfiguriert zum Ausführen von Anweisungen, um:
eine interaktive Geste am Computergerät zu empfangen;
bei Übereinstimmung der interaktiven Geste mit einer vordefinierten Geste Bestimmen eines aktuellen Kontexts des Computergeräts basierend auf zumindest einer oder mehreren Aufgaben, die Aufgaben einschließlich zuvor ausgeführter Aufgaben am Computergerät und vorhergesagter zukünftiger Aufgaben, die am Computergerät ausgeführt werden sollen, wobei der aktuelle Kontext mit einer Zeit verknüpft ist, zu der die interaktive Geste empfangen wird, und in Bezug auf die Zeit angibt, welche Aufgaben zuvor ausgeführt wurden, und welche zukünftigen Aufgaben nach der besagten Zeit vorhergesagt werden;
basierend auf dem ermittelten Kontext, Identifizieren einer oder mehrerer Softwareanwendungen zur Ausführung einer oder mehrerer der vorhergesagten zukünftigen Aufgaben, wobei die Softwareanwendungen ausführende Anwendungen, beendete Anwendungen oder deinstallierte Anwendungen umfassen; und
Anzeigen eines oder mehrerer Benutzeroberflächenelemente, die eine oder mehrere identifizierte Softwareanwendungen darstellen und auswählbar sind, um identifizierte Softwareanwendungen zu instanziieren.

11. System nach Anspruch 10, wobei der Prozessor ferner konfiguriert ist, Anweisungen auszuführen, um:
eine nächste interaktive Geste zu empfangen;
bei Übereinstimmung der nächsten interaktiven Geste mit der vordefinierten Geste Bestimmen des aktuellen Kontexts des Computergeräts basierend auf zumindest der einen oder den mehreren Aufgaben, wobei die Aufgaben die zuvor ausgeführten Aufgaben am Computergerät oder die vorhergesagten zukünftigen Aufgaben umfassen, die am Computergerät ausgeführt werden sollen;
basierend auf dem ermittelten Kontext, Identifizieren einer oder mehrere andere Softwareanwendungen; und
Anzeige anderer Benutzeroberflächenelemente, die andere Softwareanwendungen darstellen, wobei die anderen Benutzeroberflächenelemente ausgewählt werden können, um entsprechende andere Softwareanwendungen zu instanziieren.

12. System nach Anspruch 10, wobei die interaktive Geste eine kontinuierliche Wischgeste ist, die eine Berührung umfasst, die von einem ersten Punkt auf einer Berührungsbildschirmanzeige des Computergeräts beginnt und an einem zweiten Punkt auf der Berührungsbildschirmanzeige endet.

13. System nach Anspruch 10, ferner darauf gespeicherte Anweisungen umfassend, die, wenn diese durch den Prozessor ausgeführt werden, den Prozessor veranlassen, Operationen auszuführen, die Folgendes umfassen: Initiieren der Anzeige der Benutzeroberflächenelemente bei Empfangen einer fortgesetzten Wischgeste;
Identifizieren eines bestimmten Benutzeroberflächenelements, das am zweiten Punkt auf der Berührungsbildschirmanzeige angezeigt wird; und
Instanziieren einer Softwareanwendung, die mit dem bestimmten Benutzeroberflächenelement verknüpft ist.

14. System nach Anspruch 10, ferner umfassend darauf gespeicherte Anweisungen, die bei Ausführung durch den Prozessor den Prozessor veranlassen, Operationen auszuführen, die Folgendes umfassen:
Identifizieren einer zweiten interaktiven Geste, die während oder nach Empfangen der ersten interaktiven Geste empfangen wird;
Bestimmen, unabhängig von der ersten interaktiven Geste, ob die zweite interaktive Geste mit einer anderen vordefinierten Geste übereinstimmt;
bei Übereinstimmung der zweiten interaktiven Geste mit der anderen vordefinierten Geste,
Identifizieren einer oder mehrerer Aktionen, die auf dem Computergerät, basierend auf dem bestimmten Kontext, ausgeführt werden können; und
Durchführen der einen oder mehreren identifizierten Aktionen, basierend auf der zweiten interaktiven Geste oder einer Kombination von der ersten interaktiven Geste und der zweiten interaktiven Geste.

15. System nach Anspruch 10, wobei die vorhergesagten zukünftigen Aufgaben auf einer oder mehreren letzten Aufgaben basieren, die vom Benutzer in Bezug auf eine Zeit der Vorhersage durchgeführt werden, wobei die Zeit der Vorhersage auftritt, wenn der aktuelle Kontext des Computergeräts bestimmt wurde.

## Revendications

1. Procédé mis en œuvre par ordinateur pour lancer et/ou changer une application dans un dispositif informatique, le procédé comprenant :
la réception d'un geste interactif au niveau du dispositif informatique ;
lorsque le geste interactif correspond à un geste prédéfini, la détermination d'un contexte actuel du dispositif informatique sur la base d'au moins une ou plusieurs tâches, les tâches incluant des tâches précédemment réalisées au niveau du dispositif informatique et des tâches futures prédites devant être réalisées au niveau du dispositif informatique, le contexte actuel étant associé à un moment auquel le geste interactif est reçu et indiquant par rapport audit moment quelles tâches ont été précédemment réalisées et quelles tâches futures sont prédites devant être réalisées après ledit moment ;
sur la base du contexte déterminé, l'identification d'une ou plusieurs applications logicielles, les applications logicielles incluant des applications en cours d'exécution, des applications terminées ou des applications désinstallées, pour réaliser une ou plusieurs des tâches futures prédites ; et
l'affichage d'un ou plusieurs éléments d'interface utilisateur représentant les une ou plusieurs applications logicielles identifiées, dans lequel les éléments d'interface utilisateur peuvent être sélectionnés pour instancier les applications logicielles identifiées.

2. Procédé selon la revendication 1, comprenant en outre :
la réception d'un geste interactif suivant ;
lorsque le geste interactif suivant correspond au geste prédéfini, la détermination du contexte actuel du dispositif informatique sur la base des au moins une ou plusieurs tâches, les tâches incluant les tâches précédemment réalisées au niveau du dispositif informatique ou les tâches futures prédites devant être réalisées au niveau du dispositif informatique ;
sur la base du contexte déterminé, l'identification d'une ou plusieurs autres applications logicielles ; et
l'affichage d'autres éléments d'interface utilisateur représentant les autres applications logicielles dans lequel les autres éléments d'interface utilisateur peuvent être sélectionnés pour instancier les autres applications logicielles respectives.

3. Procédé selon la revendication 1, dans lequel le geste interactif est un geste de balayage continu comprenant un toucher commençant à partir d'un premier point sur un affichage d'écran tactile du dispositif informatique et se terminant au niveau d'un second point sur l'affichage d'écran tactile.

4. Procédé selon la revendication 3, comprenant en outre :
le lancement de l'affichage des éléments d'interface utilisateur lorsque le geste de balayage continu est reçu ;
l'identification d'un élément d'interface utilisateur particulier affiché au niveau du second point sur l'affichage d'écran tactile ; et
l'instanciation d'une application logicielle associée à l'élément d'interface utilisateur particulier.

5. Procédé selon la revendication 1, comprenant en outre :
l'identification d'un second geste interactif reçu pendant ou après la réception du premier geste interactif ;
le fait de déterminer, indépendamment du premier geste interactif, si le second geste interactif correspond à un autre geste prédéfini ;
lorsque le second geste interactif correspond à l'autre geste prédéfini,
l'identification d'une ou plusieurs actions qui peuvent être réalisées au niveau du dispositif informatique sur la base du contexte déterminé ; et
la réalisation des une ou plusieurs actions identifiées sur la base du second geste interactif ou d'une combinaison du premier geste interactif et du second geste interactif.

6. Procédé selon la revendication 1, dans lequel les futures tâches prédites sont basées sur une ou plusieurs tâches récentes réalisées par l'utilisateur par rapport à un moment de la prédiction, le moment de la prédiction se produisant lorsque le contexte actuel du dispositif informatique a été déterminé.

7. Procédé selon la revendication 1, comprenant en outre :
l'identification d'une application logicielle ou d'un service logiciel qui n'a pas précédemment interagi par l'intermédiaire d'un utilisateur via le dispositif informatique ou à laquelle ou auquel il a été accédé en tant que service via le dispositif informatique ; et
l'affichage d'un élément d'interface utilisateur représentant l'application logicielle avec les un ou plusieurs éléments d'interface utilisateur.

8. Procédé selon la revendication 1, dans lequel lorsqu'une application logicielle identifiée n'est pas installée au niveau du dispositif informatique, l'application logicielle est téléchargée à partir d'un serveur et installée au niveau du dispositif informatique pour affichage lors de la sélection de l'élément d'interface utilisateur correspondant.

9. Support lisible par machine comprenant des instructions qui y sont stockées, qui, lorsqu'elles sont exécutées par un processeur, amènent le processeur à réaliser un procédé selon l'une quelconque des revendications 1 à 8.

10. Système pour lancer et/ou changer une application dans un dispositif informatique, le système comprenant :
une mémoire comprenant des instructions ; et
un processeur configuré pour exécuter les instructions pour :
recevoir un geste interactif au niveau du dispositif informatique ;
lorsque le geste interactif correspond à un geste prédéfini, déterminer un contexte actuel du dispositif informatique sur la base d'au moins une ou plusieurs tâches, les tâches incluant des tâches précédemment réalisées au niveau du dispositif informatique et des tâches futures prédites devant être réalisées au niveau du dispositif informatique, le contexte actuel étant associé à un moment auquel le geste interactif est reçu et indiquant par rapport audit moment quelles tâches ont été précédemment réalisées et quelles tâches futures sont prédites devant être réalisées après ledit moment ;
sur la base du contexte déterminé, identifier une ou plusieurs applications logicielles pour réaliser une ou plusieurs des tâches futures prédites, les applications logicielles incluant des applications en cours d'exécution, des applications terminées ou des applications désinstallées ; et
afficher un ou plusieurs éléments d'interface utilisateur qui représentent les une ou plusieurs applications logicielles identifiées et peuvent être sélectionnés pour instancier les applications logicielles identifiées.

11. Système selon la revendication 10 dans lequel le processeur est en outre configuré pour exécuter les instructions pour :
recevoir un geste interactif suivant ;
lorsque le geste interactif suivant correspond au geste prédéfini, déterminer le contexte actuel du dispositif informatique sur la base des au moins une ou plusieurs tâches, les tâches incluant les tâches précédemment réalisées au niveau du dispositif informatique ou les tâches futures prédites devant être réalisées au niveau du dispositif informatique ;
sur la base du contexte déterminé, identifier une ou plusieurs autres applications logicielles ; et
afficher d'autres éléments d'interface utilisateur représentant les autres applications logicielles dans lequel les autres éléments d'interface utilisateur peuvent être sélectionnés pour instancier les autres applications logicielles respectives.

12. Système selon la revendication 10, dans lequel le geste interactif est un geste de balayage continu comprenant un toucher commençant à partir d'un premier point sur un affichage d'écran tactile du dispositif informatique et se terminant au niveau d'un second point sur l'affichage d'écran tactile.

13. Système selon la revendication 10, comprenant en outre des instructions stockées dans celui-ci, qui, lorsqu'elles sont exécutées par le processeur, amènent le processeur à réaliser des opérations comprenant :
le lancement de l'affichage des éléments d'interface utilisateur lorsque le geste de balayage continu est reçu ;
l'identification d'un élément d'interface utilisateur particulier affiché au niveau du second point sur l'affichage d'écran tactile ; et
l'instanciation d'une application logicielle associée à l'élément d'interface utilisateur particulier.

14. Système selon la revendication 10, comprenant en outre des instructions stockées dans celui-ci, qui, lorsqu'elles sont exécutées par le processeur, amènent le processeur à réaliser des opérations comprenant :
l'identification d'un second geste interactif reçu pendant ou après la réception du premier geste interactif ;
le fait de déterminer, indépendamment du premier geste interactif, si le second geste interactif correspond à un autre geste prédéfini ;
lorsque le second geste interactif correspond à l'autre geste prédéfini,
l'identification d'une ou plusieurs actions qui peuvent être réalisées au niveau du dispositif informatique sur la base du contexte déterminé ; et
la réalisation des une ou plusieurs actions identifiées sur la base du second geste interactif ou d'une combinaison du premier geste interactif et du second geste interactif.

15. Système selon la revendication 10, dans lequel les futures tâches prédites sont basées sur une ou plusieurs tâches récentes réalisées par l'utilisateur par rapport à un moment de la prédiction, le moment de la prédiction se produisant lorsque le contexte actuel du dispositif informatique a été déterminé.
